# EUROPEAN PATENT APPLICATION

(11) **EP 4 835 690 A1**
(43) Date of publication of application: **04.11.2026**
(21) Application number: 26175559.9
(22) Date of filing: 29.04.2026
(51) Int. Cl.: G06F 16/74

(54) **METHOD, APPARATUS, DEVICE, MEDIUM, AND PROGRAM PRODUCT FOR INTERACTION**

(30) Priority: 29.04.2025 CN 202510562387
(71) Applicant: Beijing Zitiao Network Technology Co., Ltd., Beijing 100190 (CN)
(72) Inventor: WEI, Wen, Beijing, 100028 (CN); HAN, Xinyi, Beijing, 100028 (CN); ZHANG, Haoran, Beijing, 100028 (CN)
(74) Representative: Marks & Clerk LLP

(57) **Abstract**

Embodiments of the present disclosure relate to a method, an apparatus, a device, a medium, and a program product for interface interaction. The method (200) includes: presenting (210), in a feed, a first interface associated with livestream, the first interface including at least object information related to at least one object associated with the livestream, a livestream segment of the livestream, and a view entry of the livestream; and presenting (220) a livestream interface corresponding to the livestream in response to a trigger on an object among the at least one object or on the view entry.

## Description

### FIELD

Example embodiments of the present disclosure generally relate to the field of computers, and in particular, to a method, an apparatus, a device, a computer-readable storage medium, and a computer program product for interaction.

### BACKGROUND

With the development of computer technology, the Internet has become an important platform for people to browse content and participate in activity transactions. Some applications may provide users with a feed of media content and provide users with services such as explanation and transaction of an object. In a social application or a content platform, the users expect that when they browse information related to an object, the application or the platform may provide more information about the object, so that the users may understand the object in more detail to facilitate decision-making on a next operation.

### SUMMARY

In a first aspect of the present disclosure, a method for interface interaction is provided. The method includes: presenting, in a feed, a first interface associated with livestream, the first interface including at least object information related to at least one object associated with the livestream, a livestream segment of the livestream, and a view entry of the livestream; and presenting a livestream interface corresponding to the livestream in response to a trigger on an object among the at least one object or on the view entry.

In a second aspect of the present disclosure, an apparatus for interface interaction is provided. The apparatus includes: a first interface presenting module configured to present, in a feed, a first interface associated with livestream, the first interface including at least object information related to at least one object associated with the livestream, a livestream segment of the livestream, and a view entry of the livestream; and a livestream interface presenting module configured to present a livestream interface corresponding to the livestream in response to a trigger on an object among the at least one object or on the view entry.

In a third aspect of the present disclosure, an electronic device is provided. The device includes at least one processor; and at least one memory, the at least one memory being coupled to the at least one processor and storing instructions for execution by the at least one processor. The instructions, when executed by the at least one processor, causes the device to perform the method of the first aspect.

In a fourth aspect of the present disclosure, a computer-readable storage medium is provided. The computer-readable storage medium has computer-executable instructions stored thereon, the computer-executable instructions being executable by a processor to implement the method of the first aspect.

In a fifth aspect of the present disclosure, a computer program product is provided, the computer program product including computer-executable instructions, the computer-executable instructions, when executed by a processor, implementing the method according to the first aspect of the present disclosure.

It should be understood that content described in this Summary section is neither intended to identify key or essential features of the embodiments of the present disclosure, nor is intended to limit the scope of the present disclosure. Other features of the present disclosure will be readily envisaged through the following description.

### BRIEF DESCRIPTION OF THE DRAWINGS

The above and other features, advantages, and aspects of the embodiments of the present disclosure will become more apparent in combination with the drawings and with reference to the following detailed description. In the drawings, the same or similar reference symbols refer to the same or similar elements, where:
FIG. 1 shows a schematic diagram of an example environment in which the embodiments according to the present disclosure may be implemented;
FIG. 2 shows a flowchart of a process for interface interaction according to some embodiments of the present disclosure;
FIG. 3A to FIG. 3F show example interfaces according to some embodiments of the present disclosure;
FIG. 4 shows a schematic structural block diagram of an example apparatus for interface interaction according to some embodiments of the present disclosure; and
FIG. 5 shows a block diagram of an electronic device in which one or more embodiments of the present disclosure may be implemented.

### DETAILED DESCRIPTION

The embodiments of the present disclosure will be described in more detail below with reference to the drawings. Although some embodiments of the present disclosure are shown in the drawings, it should be understood that the present disclosure may be implemented in various forms and should not be construed as being limited to the embodiments set forth herein. Instead, these embodiments are provided for a more thorough and complete understanding of the present disclosure. It should be understood that the drawings and embodiments of the present disclosure are only for example, and are not intended to limit the protection scope of the present disclosure.

It should be noted that the titles of any section/subsection provided herein are not restrictive. Various embodiments are described throughout this article, and any type of embodiment may be included under any section/subsection. In addition, the embodiments described in any section/subsection may be combined with any other embodiments described in the same section/subsection and/or different section/subsection in any manner.

In the description of the embodiments of the present disclosure, the term "comprise" and similar terms thereof should be understood as open-ended inclusions, that is, "comprise but not limited to". The term "based on" should be understood as "at least partially based on". The term "one embodiment" or "the embodiment" should be understood as "at least one embodiment". The term "some embodiments" should be understood as "at least some embodiments". Other explicit and implicit definitions may also be included below. The terms "first", "second", etc. may refer to different or same objects. Other explicit and implicit definitions may also be included below.

The embodiments of the present disclosure may involve data of a user, data acquisition, and/or data use, etc. These aspects all comply with corresponding laws, regulations, and related provisions. In the embodiments of the present disclosure, all data collection, acquisition, processing, machining, forwarding, and use, etc. are performed on the premise that the user is aware of and confirms. Accordingly, when implementing the embodiments of the present disclosure, the user should be informed of the type, use range, use scenario, etc. of data or information that may be involved, and the authorization of the user should be obtained, in an appropriate manner according to relevant laws and regulations. The specific notification and/or authorization manners may be changed according to actual situations and application scenarios, and the scope of the present disclosure is not limited in this regard.

The solutions in this specification and the embodiments, if personal information processing is involved, will be processed on the premise that there is a legal basis (for example, the consent of the personal information subject is obtained, or it is necessary for the performance of a contract, etc.), and the processing will only be performed within a specified or agreed scope. If the user refuses to process personal information other than the necessary information required for the basic function, it will not affect the user's use of the basic function.

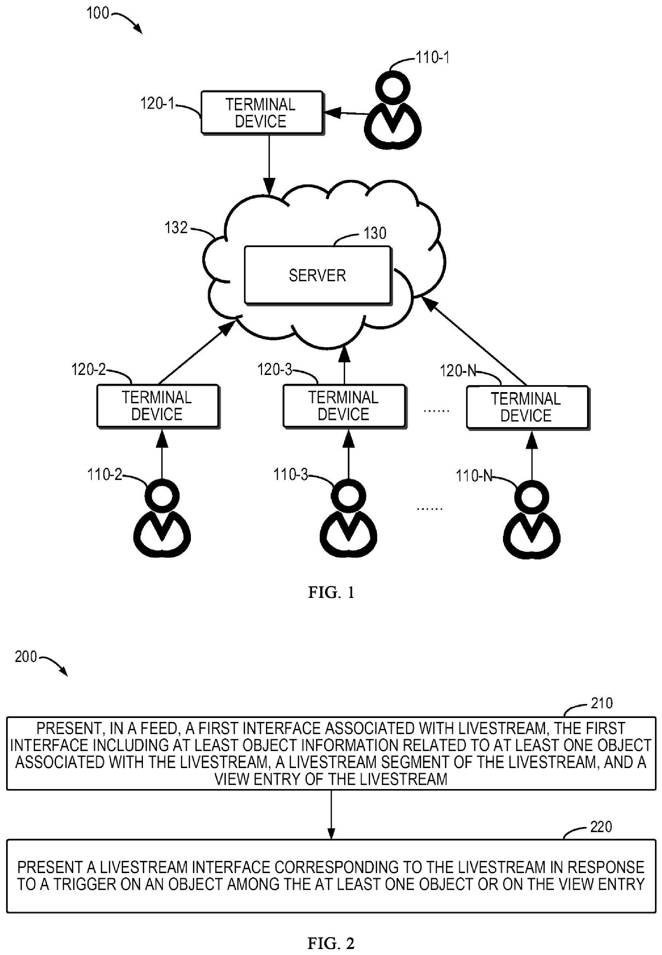

FIG. 1 shows a schematic diagram of an example environment 100 in which the embodiments of the present disclosure can be implemented. In the environment 100, one or more users 110-1, 110-2, 110-3, ..., 110-N may watch a livestream (sometimes also referred to as a "livestream session") and participate in livestream interactive events, etc., via their respective associated terminal devices 120-1, 120-2, ..., 120-N. The user 110 may also be referred to as a participant, for example. For the convenience of discussion, the users 110-1, 110-2, ..., 110-N may be collectively or individually referred to as the user 110, and the terminal devices 120-1, 120-2, ..., 120-N may be collectively or individually referred to as the terminal device 120.

In some embodiments, among all the users 110, one or more of the users, such as the user 110-1, may initiate a livestream through the associated terminal device 120-1. In some scenarios, the user 110-1 who initiates the livestream may also be referred to as a livestream initiator, or may be referred to as a streamer, a streamer user, a streamer participant, a live streamer, a livestream manager, or the like of the livestream session.

In some embodiments, the users 110-2, 110-3, ..., 110-N may be audience users who do not initiate their own livestream but join the livestream of the current livestream initiator. The audience users may also be referred to as viewing audiences, listeners, or viewing parties in the livestream.

In some embodiments, the terminal device 120 may be installed with a social application, a content platform, etc., respectively, to provide the user 110 with a feed of media content such as videos, images, and texts, and to provide a livestream service. The user 110 may operate the terminal device 120 to access a corresponding application or platform. Accordingly, the terminal device 120 may present a corresponding interface for interacting with the user 110.

In some embodiments, the terminal device 120 may also communicate with a server 130 over a network 132 to implement the supply of the feed of the media content and the livestream service. The server 130 may provide functions such as management, configuration, and maintenance of the application or the platform.

The terminal device 120 may be any type of mobile terminal, fixed terminal, or portable terminal, including a mobile phone, a desktop computer, a laptop computer, a notebook computer, a netbook computer, a tablet computer, a media computer, a multimedia tablet, a personal communication system (PCS) device, a personal navigation device, a personal digital assistant (PDA), an audio/video player, a digital camera/video camera, a television receiver, a radio broadcast receiver, an e-book device, a game device, or any combination of the foregoing, including the accessories and peripherals of these devices or any combination thereof. In some embodiments, the terminal device 120 may also support any type of interface for the user (such as a "wearable" circuit, etc.).

The server 130 may be an independent physical server, a server cluster or a distributed system composed of multiple physical servers, or may be a cloud server that provides basic cloud computing services such as cloud services, cloud databases, cloud computing, cloud functions, cloud storage, network services, cloud communications, middleware services, domain name services, security services, content delivery networks, and big data and artificial intelligence platforms. The server 130 may include, for example, a computing system/server, such as a mainframe, an edge computing node, a computing device in a cloud environment, and so on. The server 130 may provide background services for applications supporting livestream in the terminal device 120.

It should be understood that the structures and functions of the various elements in the environment 100 are described for illustrative purposes only, without suggesting any limitation to the scope of the present disclosure.

As briefly mentioned above, at present, some social applications or content platforms provide users with feeds of media content, and provide users with services such as livestream and transactions of object explanation. However, in these applications or platforms, only partial information about the object (for example, in a product advertisement) or only recommendation information about certain livestream may be provided. This makes it difficult for the user to make a decision on the next operation based only on this information, affecting the user experience.

In view of this, embodiments of the present disclosure propose a solution for interface interaction. According to this solution, a first interface associated with livestream is presented in a feed, the first interface including at least object information related to at least one object associated with the livestream, a livestream segment of the livestream, and a view entry of the livestream. Then, a livestream interface corresponding to the livestream is presented in response to a trigger on an object among the at least one object or on the view entry.

In this way, by presenting the object information related to the object associated with the livestream and the livestream segment in the livestream in the interface, the embodiments of the present disclosure enable the user to immediately understand more information about the livestream object, thereby facilitating the user to make a next decision regarding the object. By triggering the presented object or the view entry, the livestream interface may be jumped to, allowing the user to continue to implement a relevant decision regarding the object in the livestream interface. This may save the decision-making time of the user and improve the user experience.

Some example embodiments of the present disclosure will be described below with continued reference to the drawings.

FIG. 2 shows a flowchart of a process 200 for interaction according to some embodiments of the present disclosure. For the convenience of discussion, these embodiments will be described with reference to the environment 100 of FIG. 1. These embodiments may be implemented at the electronic device 110 of FIG. 1.

At block 210, the terminal device 120 presents, in a feed, a first interface associated with livestream. The first interface includes at least object information related to at least one object associated with the livestream, a livestream segment of the livestream, and a view entry of the livestream.

As an example, the feed may refer to a series of content flows pushed for a user in a social application, a content platform, or other applications or platforms. The terminal device 120 in FIG. 1 may be installed with such an application or platform, which may present media content, such as videos, audios, images, texts, etc., to the user in the form of a feed through an interface. The application or platform may also provide a livestream service. The first interface may be an interface in the feed presented for the user by the application or platform in the terminal device 120.

In some embodiments, during a browsing process of the feed, in response to a user operation, such as the user's switching operation on content items in the feed, it is determined to present the first interface associated with a specific livestream to the user in a next content presentation. The selection of such a first interface, or the selection of the livestream to be presented may be implemented according to an appropriate content recommendation strategy, which is not limited in the embodiments of the present disclosure.

The object associated with the livestream may refer to an object to be explained in the livestream, which may be a physical object or a virtual object. On the premise of complying with relevant laws and regulations, the type of the object may depend on the livestream initiator. The physical object may include, for example, a physical product, such as food and beverage, clothing, shoes, and a bag, a digital product, and so on. The virtual object may include, for example, an online course, digital music, a product coupon, and so on. The livestream initiator may also be referred to as a streamer, a streamer user, a streamer participant, a live streamer, a livestream manager, or the like of the livestream session.

In some embodiments, the at least one object presented on the first interface may be determined based on an interaction indicator corresponding to each of the at least one object in the livestream. Taking the object being a physical product as an example, the interaction indicator may include, for example, a sales volume of the product. In this case, it is possible to sort according to the sales volume of current each object in the livestream room of the livestream, and determine at least one product with a high sales volume as the at least one object. The interaction indicator may also include, for example, the number of likes given to the product, the number of times the product has been commented, the number of products added to a shopping cart, and so on. The object presented in the first interface may be one or more objects with the highest interaction indicators in the livestream, such as the object with the most comments or purchases. It should be understood that the interaction indicator may also include any other suitable indicator related to the interaction with the object, which is not limited here. As an example, the at least one object to be presented on the first interface may be determined based on a single interaction indicator or a plurality of interaction indicators, and the embodiments of the present disclosure are not limited in this regard. By presenting an object with a higher interaction indicator in the livestream in the first interface, a user viewing the first interface can more easily find an object of interest, thereby obtaining the object by jumping to the livestream interface.

In some embodiments, the object information related to the at least one object may include at least one of the following: an object name of each of the at least one object, description information of each of the at least one object in the livestream, or an image corresponding to each of the at least one object. Taking the object being a physical product as an example, in this case, the description information corresponding to the object may include, for example, discount information, price information, product features highlighted in the current livestream, etc., of the object in the livestream room. The image of the object may be used, for example, to display the appearance, features, etc. of the product. It should be understood that the object information may not be limited to the name, description information, and image of the object, but may also include any other suitable information about the object, so as to facilitate the user to understand the object.

In some embodiments, the livestream segment in the first interface may include livestream content associated with the at least one object. For example, the livestream segment may be a segment about explaining the at least one object in the livestream. For another example, the livestream segment may also be a segment about introducing the issuance of a coupon, a giveaway, or other welfare resources for the at least one object in the livestream. These are only examples, and it should be understood that the livestream segment may also include any suitable segment related to the at least one object in the livestream, which is not limited in the embodiments of the present disclosure. The livestream segment may also be referred to as a highlight segment, a highlight slice, or the like. As an example, the terminal device 120 may recognize that when the livestream room is performing livestream related to the at least one object, the corresponding livestream segment may be obtained by cutting the image content of the livestream and the corresponding explanation audio.

It may be understood that the at least one object may be an object that has been explained or introduced in the livestream. In this way, when browsing the feed vai the terminal device 120, the user may see the object information of the object and the corresponding explanation content when browsing to the first interface, thereby facilitating the user to quickly know more information related to the object.

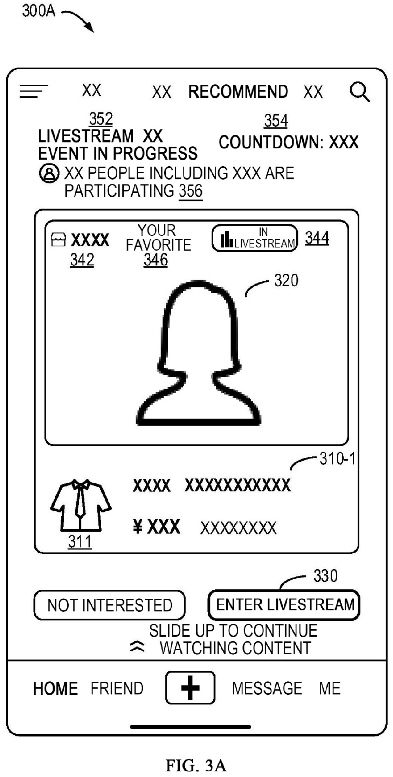

As an example, the livestream view entry in the first interface may be configured to jump to the livestream interface corresponding to the livestream by being triggered. The presentation style of the view entry may include any suitable interface elements, such as a icon, a text, a button, etc., or a combination of a plurality of interface elements, which is not limited in the embodiments of the present disclosure. A plurality of embodiments of the first interface will be discussed in detail below in conjunction with FIG. 3A to FIG. 3F.

At block 220, if the terminal device 120 receives a trigger on an object among the at least one object or on the view entry, a livestream interface corresponding to the livestream is presented. It may be understood that the livestream interface is an interface for displaying livestream.

As an example, the trigger on the object among the at least one object may include a trigger on the object information of the object. In addition, if the first interface includes a view entry for the object, the livestream interface may also be jumped to by triggering the view entry of the object. It should be understood that the trigger on the object may include the trigger on one or more interface elements related to the object, which is not limited in the embodiments of the present disclosure.

The trigger on the interface elements (such as the object information, other interface elements related to the object, the view entry, etc.) discussed herein may include, but is not limited to, a trigger operation in any appropriate manner, such as clicking, long pressing, and sliding. The specific trigger manner may be determined according to the presentation style of the interface element, etc.

It should be understood that the corresponding livestream time of the livestream segment appearing in the livestream is earlier than the time when the livestream interface is presented. Therefore, after browsing the first interface including the object information and the livestream segment, the user may trigger the object or the livestream view entry, so that the terminal device 120 jumps from the first interface to the livestream interface of the livestream corresponding to the livestream segment.

Through the embodiments of the present disclosure, the object information related to the at least one object associated with the livestream and the livestream segment of the livestream are presented in the first interface, so that the user may immediately understand more information about the at least one object, thereby facilitating the user to make a next decision regarding the object. By triggering the object among the at least one object or the view entry to present the livestream interface corresponding to the livestream, it is convenient for the user to implement a relevant decision regarding the object or other objects in the livestream. This may save the decision-making time of the user and improve the user experience.

FIG. 3A to FIG. 3F show example interfaces 300A to 300F according to some embodiments of the present disclosure. The interfaces 300A to 300F may be provided by the terminal device 120 shown in FIG. 1. The interfaces 300A to 300F may be specific embodiments of the first interface in the process 200. It should be understood that the interfaces shown in the drawings are only examples, and there may actually be various interface designs. Each graphic element in the interface may have different arrangements and different visual representations, one or more elements therein may be omitted or replaced, and there may also be one or more other elements. The embodiments of the present disclosure are not limited in this regard.

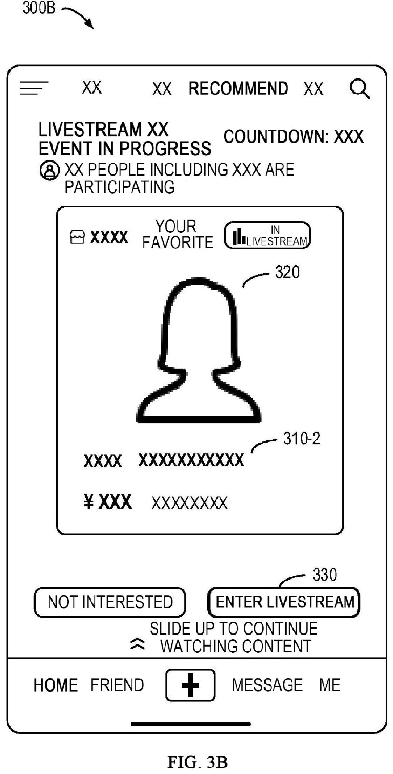

Referring to FIG. 3A and FIG. 3B, the interfaces 300A and 300B respectively show first interfaces with different presentation styles in a case where the at least one object includes one object. In the interface 300A or 300B, the first interface may include object information 310-1 or 310-2 related to the object, a livestream segment 320 of the livestream, and a view entry 330 of the livestream. The object information 310-1 may include, for example, a name of the object, description information of the object, such as price information, discount information, a feature, etc., and an image 311 corresponding to the object. The object information 310-2 may include, for example, the name of the object and the description information of the object, but does not include the image corresponding to the object. It should be understood that the object information presented on the first interface may determine one or more pieces of information to be presented based on a specific presentation style.

Taking the interface 300A as an example, in some embodiments, the terminal device 120 may present at least one of the following in the first interface in association with the livestream segment 320: an initiator 342 of the livestream, a livestream state 344 of the livestream, and information 346 for indicating an association relationship between a user and the initiator of the livestream. As an example, the initiator 342 of the livestream may correspond to the user 110-1 who initiates the livestream. As discussed above, the livestream initiator may also be referred to as a streamer, a streamer user, a streamer participant, a live streamer, a livestream manager, or the like of the livestream session. As an example, the livestream state 344 may indicate that the livestream is in a live state, so as to indicate to the user that the livestream initiator 342 is currently streaming live. The user may be, for example, an audience user of the livestream, such as users 110-2, 110-3, ..., 110-N.

As an example, the association relationship between the user and the livestream initiator 342 may include, for example, that the user has followed the livestream initiator 342 or added the livestream initiator 342 to favorites, the user has previously purchased a product of the livestream initiator 342, and so on. It should be understood that the association relationship between the user and the initiator of the livestream may also include any other appropriate relationship, which is not limited in the implementation of the present disclosure.

In some embodiments, the first interface may further include livestream interaction information of the livestream. Still taking the interface 300A as an example, the livestream interaction information may include at least one of the following: a name 352 of an interactive event related to the livestream, time information 354 of the interactive event, a number of users participating in the interactive event, and a notification 356 about participation of a user in the interactive event. As an example, the interactive event may be, for example, a certain activity initiated in the livestream, such as a promotion activity of a certain product, an activity of issuing welfare resources, and so on. The time information 354 of the interactive event may include, for example, countdown information of the activity, time information of the start and end of the activity, and so on. The number of users participating in the interactive event may indicate how many audience users have participated in the activity. The notification 356 about the user's participation in the interactive event may, for example, notify, via the first interface, that a certain user is participating in the activity, etc. It should be understood that these are only examples and are not intended to be any limitation, and the livestream interaction information may also include any other suitable information.

In some embodiments, in a case where the at least one object includes a plurality of objects, object information of each of the plurality of objects may be switched to be presented in the first interface. As an example, switching presentations may mean that the object information of each of the plurality of objects needs to be switched to be presented in the first interface. Assuming that the plurality of objects include 6 (or other total number of) objects, then object information of 1 (or 2, 3, etc., which is less than the total number of) object(s) may be presented in the first interface every time, and then the object information of other objects may be presented by switching.

As an example, when switching to present the object information of the object, the livestream segment corresponding to the object may be presented accordingly. If the livestream segment corresponding to the object and the object information are presented side by side in the same area, when the object information of the object is switched to be presented, the livestream segment corresponding to the object may be switched to be presented accordingly. If the livestream segment corresponding to the object and the object information are not presented side by side, but are presented in an overlapping manner, or are presented in different areas respectively, or in other manners that are not presented side by side, when the object information of the object is switched to be presented, the livestream segment corresponding to the object may be directly replaced to be presented.

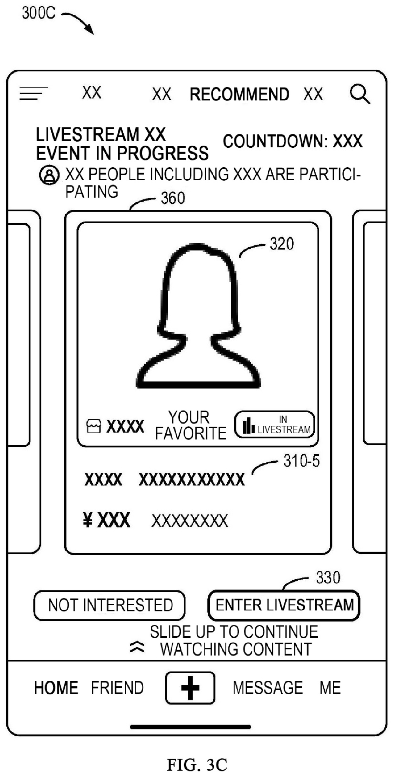

Referring to the interface 300C in FIG. 3C, in some embodiments, the first interface may include a first area 360 for presenting first object information 310-5 of a first object among the at least one object and a livestream segment 320 corresponding to the first object. If a switching trigger acting on the first area 360 is received, the terminal device 120 may switch, in the first area 360, to present object information of a second object among the at least one object and a livestream segment corresponding to the second object.

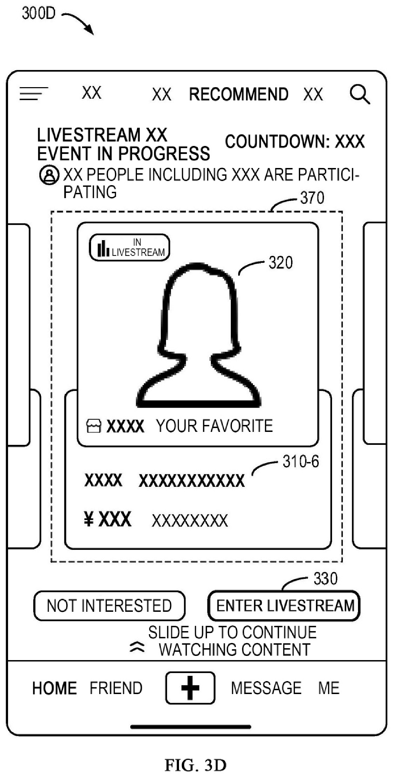

Referring again to the interface 300D in FIG. 3D, the first interface may include a first area 370 for presenting first object information 310-6 of a first object among the at least one object and a livestream segment 320 corresponding to the first object. If a switching trigger acting on the first area 370 is received, the terminal device 120 may switch, in the first area 370, to present object information of a second object among the at least one object and a livestream segment corresponding to the second object.

As an example, the operation of switching trigger acting on the first area 360 or the first area 370 may include, for example, a sliding operation, a long press operation, or any other appropriate operation. For example, the user may present the object information of the previous object or the next object by a left sliding operation or a right sliding operation, and the corresponding livestream segment.

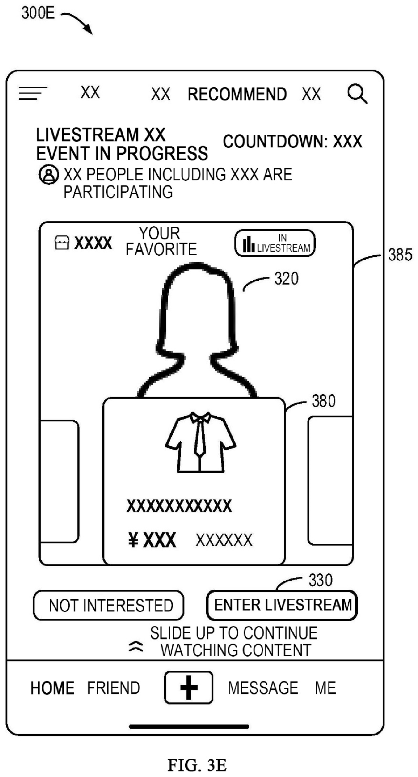

Referring to the interface 300E in FIG. 3E, in some embodiments, the first interface may include a second area 380 and a third area 385. The second area 380 may be used to present first object information of a first object among the at least one object. The third area 385 may be used to present a livestream segment 320 corresponding to the first object. If a switching trigger acting on the second area 380 is received, the terminal device 120 may switch, in the second area 380, to present object information of a second object among the at least one object, and present, in the third area 385, a livestream segment corresponding to the second object. In this case, the livestream segment corresponding to the second object presented in the third area 385 may be directly replaced, without the need of the switching trigger.

Due to considerations on the size of the interface, the above interfaces 300C to 300E show the case where the object information of a single object and the corresponding livestream segment are presented each time in the first interface. It should be understood that in other embodiments, the object information of, for example, two, three, or other number of objects and the corresponding livestream segments may also be presented simultaneously in the first interface each time. Certainly, such a presentation manner needs to ensure the presentation effect of the corresponding object information and the corresponding livestream segment.

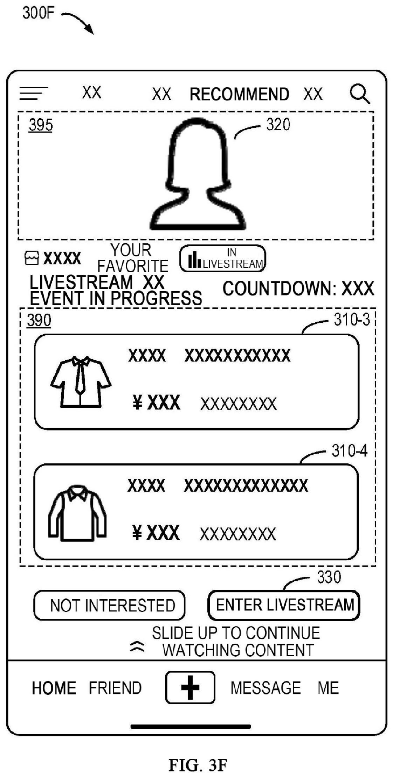

Alternatively, or in addition, in some embodiments, in the case where the at least one object includes a plurality of objects, the object information of the plurality of objects may also be presented uniformly in the first interface. Referring to the interface 300F in FIG. 3F, in some embodiments, the first interface may include a fourth area 390 and a fifth area 395. The fourth area 390 may be used to present the object information of the at least one object, such as object information 310-3 and object information 310-4. The fifth area 395 may be used to present the livestream segment 320.

Therefore, there may be a plurality of presentation manners for the object information of the at least one object and the livestream segment of the object. In practical applications, a suitable presentation manner may be selected according to specific situations.

In some embodiments, when presenting the livestream interface, if the terminal device 120 receives a trigger on an object among the at least one object, the terminal device 120 may present detailed information of the triggered object in the livestream interface. The detailed information may include at least part of the object information of the object. As an example, the detailed information of the object may comprehensively and detailedly display the information of the object. In addition to the object information discussed above, the detailed information of the object may further include, for example, the function, material, transaction agreement, shipping instruction, service guarantee, etc. of the object, and may also include a plurality of detail pictures of the object. It should be understood that the detailed information of the object may include more detailed information about the object than the object information, which is not limited here.

As an example, if the trigger on the object is received, the detailed information of the triggered object may be presented in the livestream interface via a panel or a window, etc. When such a panel or window receives a trigger from the user, its presentation may be cancelled, so that the detailed information of the object is cancelled to be presented, thereby enabling the livestream interface to present a complete livestream image.

In some embodiments, when presenting the livestream interface, if the terminal device 120 receives a trigger on the view entry 330, the terminal device 120 may present, in the livestream interface, an object list associated with the livestream. The object list may include at least the at least one object. It should be understood that the object list may also include other objects that have not been explained in the livestream. The object list may also be referred to as a shopping cart list.

As an example, the at least one object may be placed at the top of the list in the object list. As another example, in the object list, the at least one object may be specially marked, for example, marked as information such as "just browsed" or "just viewed". This may facilitate the user to know which objects are the objects presented in the first interface.

As an example, if the trigger on the view entry 330 is received, the object list may be presented in the livestream interface via a panel or a window, etc. When such a panel or window receives the trigger from the user, its presentation may be cancelled, so that the object list is cancelled to be presented, thereby enabling the livestream interface to present the complete livestream image.

By presenting, in the first interface, the object information related to the at least one object associated with the livestream and the livestream segment of the livestream, the embodiments of the present disclosure enable the user to immediately understand more information about the at least one object, thereby facilitating the user to make a next decision regarding the object. By triggering the object among the at least one object or the view entry to present the livestream interface corresponding to the livestream, it is convenient for the user to implement a relevant decision regarding the object. This may save the decision-making time of the user and improve the user experience.

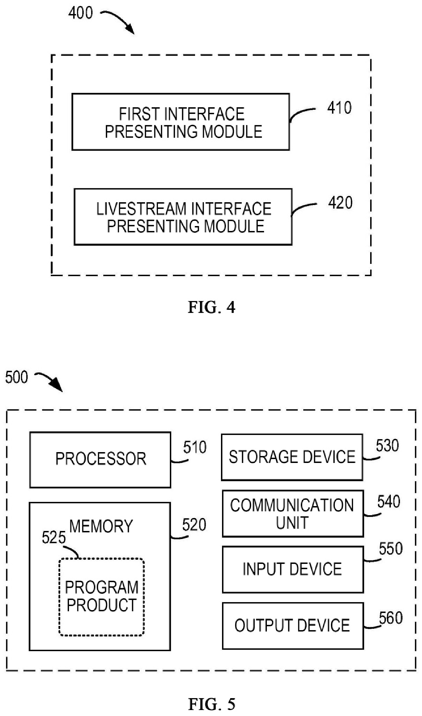

The embodiments of the present disclosure further provide a corresponding apparatus for implementing the above methods or processes. FIG. 4 shows a schematic structural block diagram of an example apparatus 400 for interface interaction according to some embodiments of the present disclosure. The apparatus 400 may be implemented as or included in the terminal device 120. Each module/component in the apparatus 400 may be implemented by hardware, software, firmware, or any combination thereof.

As shown in the figure, the apparatus 400 includes a first interface presenting module 410 configured to present, in a feed, a first interface associated with livestream, the first interface including at least object information related to at least one object associated with the livestream, a livestream segment of the livestream, and a view entry of the livestream; and a livestream interface presenting module 420 configured to present a livestream interface corresponding to the livestream in response to a trigger on an object among the at least one object or on the view entry.

In some embodiments, the livestream segment in the first interface includes livestream content associated with the at least one object.

In some embodiments, the at least one object includes a plurality of objects, and the object information related to the plurality of objects is presented in the first interface by at least one of the following: the object information of the plurality of objects being presented uniformly in the first interface, and object information of each of the plurality of objects being switched to be presented in the first interface.

In some embodiments, the first interface includes a first area for presenting first object information of a first object among the at least one object and a livestream segment corresponding to the first object, and the apparatus 400 further includes a first switching presenting module configured to switch, in the first area, to present object information of a second object among the at least one object and a livestream segment corresponding to the second object, in response to a switching trigger acting on the first area.

In some embodiments, the first interface includes a second area and a third area, the second area is used to present first object information of a first object among the at least one object, the third area is used to present a livestream segment corresponding to the first object, and the apparatus 400 further includes a second switching presenting module configured to switch, in the second area, to present object information of a second object among the at least one object and present, in the third area, a livestream segment corresponding to the second object, in response to a switching trigger acting on the second area.

In some embodiments, the first interface includes a fourth area and a fifth area, the fourth area is used to present the object information of the at least one object, and the fifth area is used to present the livestream segment.

In some embodiments, the at least one object presented on the first interface is determined based on an interaction indicator corresponding to each of the at least one object in the livestream.

In some embodiments, the livestream interface presenting module 420 is further configured to, present, in response to the trigger on the object among the at least one object, in the livestream interface, detailed information of the triggered object, where the detailed information includes at least part of the object information of the object; or in response to the trigger on the view entry, present, in the livestream interface, an object list associated with the livestream, where the object list includes at least the at least one object.

In some embodiments, the object information related to the at least one object includes at least one of the following: an object name of each of the at least one object, description information of each of the at least one object in the livestream, and an image corresponding to each of the at least one object.

In some embodiments, the apparatus 400 further includes a livestream related information presenting module configured to present at least one of the following in the first interface in association with the livestream segment: an initiator of the livestream, a livestream state of the livestream, and information for indicating an association relationship between a user and the initiator of the livestream.

In some embodiments, the first interface further includes livestream interaction information of the livestream, the livestream interaction information including at least one of the following: a name of an interactive event related to the livestream, time information of the interactive event, a number of users participating in the interactive event, and a notification about participation of a user in the interactive event.

The units and/or modules included in the apparatus 400 may be implemented in various ways, including software, hardware, firmware, or any combination thereof. In some embodiments, one or more units and/or modules may be implemented using software and/or firmware, such as machine-executable instructions stored on a storage medium. In addition to machine-executable instructions or as an alternative, some or all units and/or modules in the apparatus 400 may be implemented at least partially by one or more hardware logic components. As an example, rather than a limitation, example types of hardware logic components that may be used include a field programmable gate array (FPGA), an application specific integrated circuits (ASIC), a application specific standard part (ASSP), a system-on-chips (SOC), a complex programmable logic devices (CPLD), and so on.

FIG. 5 shows a block diagram of an electronic device 500 in which one or more embodiments of the present disclosure may be implemented. It should be understood that the electronic device 500 shown in FIG. 5 is only for example, and should not constitute any limitation on the functionality and scope of the embodiments described herein. The electronic device 500 shown in FIG. 5 may be used to implement the terminal device 120 in FIG. 1 or the apparatus 400 in FIG. 4.

As shown in FIG. 5, the electronic device 500 is in the form of a general electronic device. The components of the electronic device 500 may include, but are not limited to, one or more processors or processing units 510, a memory 520, a storage device 530, one or more communication units 540, one or more input devices 550, and one or more output devices 560. The processing unit 510 may be an actual or virtual processor and may execute various processes based on the programs stored in the memory 520. In a multi-processor system, multiple processing units execute computer-executable instructions in parallel to improve the parallel processing capability of the electronic device 500.

The electronic device 500 typically includes multiple computer storage media. Such media may be any available medium that is accessible to the electronic device 500, including, but not limited to, a volatile and non-volatile medium, removable and a non-removable medium. The memory 520 may be a volatile memory (for example, a register, a cache, a random access memory (RAM)), a non-volatile memory (such as a read-only memory (ROM), an electrically erasable programmable read-only memory (EEPROM), a flash memory), or any combination thereof. The storage device 530 may be removable or non-removable medium, and may include a machine-readable medium, such as a flash drive, a disk, or any other medium, which may be used to store information and/or data and may be accessed within the electronic device 500.

The electronic device 500 may further include additional removable/non-removable, volatile/non-volatile memory media. Although not shown in FIG. 5, a disk driver for reading from or writing to a removable, non-volatile disk (such as a "floppy disk"), and an optical disk driver for reading from or writing to a removable, non-volatile optical disk may be provided. In these cases, each driver may be connected to the bus (not shown) by one or more data medium interfaces. The memory 520 may include a computer program product 525 having one or more program modules configured to perform various methods or acts of the various embodiments of the present disclosure.

The communication unit 540 implements communication with other electronic devices via the communication medium. In addition, the functions of the components of the electronic device 500 may be implemented by a single computing cluster or multiple computing machines, and these computing machines may communicate via communication connections. Therefore, the electronic device 500 may use a logical connection with one or more other servers, a network personal computer (PC), or another network node to operate in a networked environment.

The input device 550 may be one or more input devices, such as a mouse, a keyboard, a tracking ball, etc. The output device 560 may be one or more output devices, such as a display, a speaker, a printer, etc. The electronic device 500 may also communicate with one or more external devices (not shown) via the communication unit 540 as needed, the external devices such as a storage device, a display device, etc., and the external devices communicate with one or more devices that enable the user to interact with the electronic device 500, or communicate with any devices (such as a network card, a modem, etc.) that enable the electronic device 500 to communicate with one or more other electronic devices. Such communication may be performed via input/output (I/O) interfaces (not shown).

According to an example implementation of the present disclosure, there is provided a computer-readable storage medium having computer-executable instructions stored thereon, where the computer-executable instructions are executed by a processor to implement the method described above. According to an example implementation of the present disclosure, there is further provided a computer program product tangibly stored on a non-transitory computer-readable medium and including computer-executable instructions, and the computer-executable instructions are executed by a processor to implement the method described above.

Various aspects of the present disclosure are described herein with reference to flowcharts and/or block diagrams of methods, apparatuses, devices, and computer program products implemented according to the present disclosure. It should be understood that each block of the flowchart and/or block diagram, and a combination of various blocks in the flowchart and/or block diagram may be implemented by computer-readable program instructions.

These computer-readable program instructions may be provided to a processing unit of a general-purpose computer, a special-purpose computer, or other programmable data processing apparatus to produce a machine, so that these instructions, when executed by the processing unit of the computer or other programmable data processing apparatus, produce an apparatus for implementing a function/act specified in one or more blocks in the flowchart and/or block diagram. These computer-readable program instructions may also be stored in a computer-readable storage medium, and these instructions enable the computer, the programmable data processing apparatus, and/or other devices to work in a specific manner, and thus, the computer-readable medium storing the instructions includes a manufacture, which includes instructions for implementing various aspects of the function/act specified in one or more blocks in the flowchart and/or block diagram.

The computer-readable program instructions may be loaded onto a computer, another programmable data processing apparatus, or another device, so that a series of operation steps are performed on the computer, the another programmable data processing apparatus, or the another device to produce a computer-implemented process, thereby enabling the instructions executed on the computer, the another programmable data processing apparatus, or the another device to implement the function/act specified in one or more blocks in the flowchart and/or block diagram.

The flowchart and block diagram in the drawings show the possibly implemented architectures, functions, and operations of the system, the method, and the computer program product according to multiple implementations of the present disclosure. In this regard, each block in the flowchart or block diagram may represent a module, a program segment, or a part of instructions, and the module, the program segment, or the part of instructions contains one or more executable instructions for implementing the specified logical function. In some alternative implementations, the functions marked in the blocks may also occur in an order different from that marked in the drawings. For example, two consecutive blocks may actually be performed substantially in parallel, or they may sometimes be performed in the reverse order, depending on the functions involved. It should also be noted that each block in the block diagram and/or the flowchart, and a combination of blocks in the block diagram and/or the flowchart may be implemented by a special-purpose hardware-based system that executes specified functions or acts, or may be implemented by a combination of special-purpose hardware and computer instructions.

The implementations of the present disclosure have been described above, and the above description is for purpose of example, non-exhaustive, and not limited to the disclosed implementations. Without departing from the scope of the illustrated implementations, many modifications and changes are apparent to those of ordinary skill in the art. The terms used herein are selected to best explain the principles, actual applications, or improvements to the technology in the market of the implementations, or to enable other those of ordinary skill in the art to understand the implementations disclosed herein.

## Claims

1. A method (200) of interface interaction, comprising:
presenting (210) a first interface associated with livestream, the first interface comprising at least object information related to at least one object associated with the livestream, a livestream segment of the livestream, and a user interface element of the livestream; and
presenting (220) a livestream interface corresponding to the livestream in response to a trigger on an object among the at least one object or on the user interface element.

2. The method (200) of claim 1, wherein the livestream segment in the first interface comprises livestream content associated with the at least one object.

3. The method (200) of claim 1 or 2, wherein the at least one object comprises a plurality of objects, and the object information related to the plurality of objects is presented in the first interface by at least one of the following:
object information of the plurality of objects being presented uniformly in the first interface, and
object information of each of the plurality of objects being switched to be presented in the first interface.

4. The method (200) of any of claims 1 to 3, wherein the first interface comprises a first area for presenting first object information of a first object among the at least one object and a livestream segment corresponding to the first object, and
the method further comprises:
switching, in the first area, to present object information of a second object among the at least one object and a livestream segment corresponding to the second object, in response to a switching trigger acting on the first area.

5. The method (200) of any of claims 1 to 3, wherein the first interface comprises a second area and a third area, the second area is used to present first object information of a first object among the at least one object, the third area is used to present a livestream segment corresponding to the first object, and
the method further comprises:
in response to a switching trigger acting on the second area,
switching to present object information of a second object among the at least one object in the second area, and
presenting a livestream segment corresponding to the second object in the third area.

6. The method (200) of any of claims 1 to 3, wherein the first interface comprises a fourth area and a fifth area, the fourth area is used to present the object information of the at least one object, and the fifth area is used to present the livestream segment.

7. The method (200) of any of claims 1 to 6, wherein the at least one object presented on the first interface is determined based on an interaction indicator corresponding to each of the at least one object in the livestream.

8. The method (200) of any of claims 1 to 7, wherein presenting (220) the livestream interface comprises:
in response to the trigger on the object among the at least one object, presenting, in the livestream interface, detailed information of the triggered object, wherein the detailed information at least partially comprises the object information of the object; or
in response to the trigger on the user interface element, presenting, in the livestream interface, an object list associated with the livestream, wherein the object list comprises at least the at least one object.

9. The method (200) of any of claims 1 to 8, wherein the object information related to the at least one object comprises at least one of the following:
an object name of each of the at least one object,
description information of each of the at least one object in the livestream, and
an image corresponding to each of the at least one object.

10. The method (200) of any of claims 1 to 9, further comprising:
presenting at least one of the following in the first interface in association with the livestream segment:
an initiator of the livestream,
a livestream state of the livestream, and
information for indicating an association relationship between a user and the initiator of the livestream.

11. The method (200) of any of claims 1 to 10, wherein the first interface further comprises livestream interaction information of the livestream, the livestream interaction information comprising at least one of the following:
a name of an interactive event related to the livestream,
time information of the interactive event,
a number of users participating in the interactive event, and
a notification about participation of a user in the interactive event.

12. An apparatus (400) for interface interaction, comprising:
a first interface presenting module (410) configured to present a first interface associated with livestream, the first interface comprising at least object information related to at least one object associated with the livestream, a livestream segment of the livestream, and a user interface element of the livestream; and
a livestream interface presenting module (420) configured to present a livestream interface corresponding to the livestream in response to a trigger on an object among the at least one object or on the user interface element.

13. An electronic device (500), comprising:
at least one processor (510); and
at least one memory (520), the at least one memory (520) is coupled to the at least one processor (510) and stores instructions for execution by the at least one processor (510), the instructions, when executed by the at least one processor (510), causing the electronic device (500) to perform the method of any of claims 1 to 11.

14. A computer-readable storage medium having computer-executable instructions stored thereon, the computer-executable instructions are executable by a processor to implement the method of any of claims 1 to 11.

15. A computer program product comprising computer-executable instructions, the computer-executable instructions, when executed by a processor, implementing the method of any of claims 1 to 11.
